# EUROPÄISCHE PATENTSCHRIFT

(11) **EP 0 381 007 B1**
(45) Veröffentlichungstag und Bekanntmachung des Hinweises auf die Patenterteilung: **24.03.1993**
(21) Anmeldenummer: 90101261.7
(22) Anmeldetag: 23.01.1990
(51) Int. Cl.: C02F 3/28

(54) **Verfahren und Anlage zum anaeroben Abbau von hochbelasteten Prozessabwässern**
Process and installation for the anaerobic digestion of highly charged process waters
Procédé et installation de digestion anaérobie d'eaux de fabrication à forte charge

(30) Priorität: 01.02.1989 DE 3902867
(43) Veröffentlichungstag der Anmeldung: 08.08.1990
(73) Patentinhaber: REIFLOCK-ABWASSERTECHNIK GMBH, 76532 Baden-Baden (DE)
(72) Erfinder: Gött, Erich, D-7630 Lahr (DE)
(74) Vertreter: Zipse + Habersack

(56) Entgegenhaltungen:
- EP-A- 0 077 002
- EP-A- 0 143 149
- EP-A- 0 245 910
- DE-A- 3 314 863
- DE-A- 3 327 032
- US-A- 4 213 857
- GWF-WASSER/ABWASSER, Band 126, Heft 2, Februar 1985, Seiten 56-65; A. AIVASIDIS et al.: Biomasseabtrennung in der anaeroben Abwasserreinigung"; Seite 8, Punkt 3. "Biomasse-Rückhaltung/-Rückführung"

## Beschreibung

Die Erfindung betrifft ein Verfahren zum anaeroben Abbau von hochbelasteten Prozeßabwässern, wie sie insbesondere bei der chemischen Industrie, bei Papierfabriken, bei Zellulosefabriken, bei Fischfabriken, bei der Alkohol-produktion und -vernichtung od. dgl., anfallen, wobei der CSB-Gehalt bis zu 10⁶mg/l oder mehr betragen kann. Sie gibt ferner eine bevorzugte Anlage zur Durchführung des Verfahrens an.

Bei kommunalen Kläranlagen ist es bekannt, den Klärschlamm einem normalen Faulprozeß zu unterwerfen, bei welchem der Klärschlamm einem Faulbehälter zugeführt wird, in dem durch verschiedene prozessuale Verfahren ein Abbau des Klärschlammes erfolgt, der einem Nachreiniger zugeleitet wird.

In der DE-PS 33 35 984 ist ein Verfahren zur anaeroben Reinigung chemischer Industrieabwässer, die in gelöster Form organisch-chemische Verbindungen mit Ausnahme nicht substituierter und halogensubstituierter aliphatischer Kohlenwasserstoff enthalten, vorgeschlagen, bei dem zusätzlich Schlamm eingeleitet wird. Das vorbekannte Verfahren besteht darin, daß der anaerobe Abbau gemeinsam mit zugemischtem kommunalem Klärschlamm erfolgt. Damit soll erreicht werden, daß chemische Industrieabwässer gemeinsam mit dem zugemischten, kommunalen Klärschlamm anaerob abgebaut werden.

Der vorliegenden Erfindung liegt demgegenüber die Aufgabe zugrunde, unverdünnte Abwässer hoher Konzentration anaerob durch Ausfaulung unter Energierückgewinnung abzubauen, wobei das selbständige Aufbereiten von Prozeßabwässern ohne zusätzliche Eingabe von kommunalem Schlamm oder irgendwelchen Impfschlämmen erfolgen soll.

Zur Lösung der gestellten Aufgabe wird ein Verfahren der eingangs genannten Art vorgeschlagen, welches dadurch gekennzeichnet ist, daß in mindestens einem Faulbehälter bei ca. 34° C ein Faulprozeß in Gang gesetzt wird, daß ein Faulschlamm durch Abziehen im unteren Bereich und Zuimpfen im oberen Bereich des Faulbehälters mittels einer Pumpe über einen externen Kreislauf durch kontinuierliche Umwälzung vermischt wird, wobei gleichzeitig Faulwasser in verschiedenen Höhen des Faulbehälters unter Einleitung von Sauerstoff eingebracht wird, um eine ständige, gute Durchmischung des Faulbehälterinhalts zu gewährleisten, wobei nach dem Einfahren des Faulprozesses ohne Beifügung von kommunalem Faulschlamm eine Umstellung auf chemische Prozeßabwässer derart durchgeführt wird, daß die Prozeßabwässer in einzelnen Behältern getrennt und zuvor analysiert werden und von den Behältern in Abhängigkeit des Faulungsprozesses in einem Mischbehälter nach einer gewissen Zusammensetzung vorgemischt und kontinuierlich für ca. 24 Stunden dem Faulungsprozeß im Faulbehälter zugeleitet werden, wobei anfallender Faulschlamm einem dem Faulbehälter vorgeschalteten Flockerbehälter zugeleitet wird, um eine genau dosierte Menge eines Flockungsmittels zuzugeben und mittels Rührer mit dem Faulschlamm zu durchmischen, wobei der ausgeflockte Faulschlamm wiederum dem externen Kreislauf zur Umwälzung des Faulschlammes im Faulbehälter zugeführt wird und wobei über den Flockerbehälter eine Verdrängung erfolgt und in einem zweiten, nachgeschalteten Behälter ein Absetzen des gröbsten Schlammes erfolgt, worauf das Trübwasser einem dritten und ggf. vierten Behälter zum Absetzen der noch vorhandenen Schlammanteile zugeleitet wird, worauf das im letzten Behälter verdrängte Trübwasser entweder über einen Pufferbehälter einer biologischen Stufe zugeführt oder über eine Pumpe dem Faulbehälter zugeleitet wird, und daß das im Faulbehälter erzeugte Gas einem Gasbehälter zugeführt und anschließend gereinigt einem Entnahmesystem oder einer Abfackeleinrichtung zugeführt wird.

Mit dem Verfahren gemäß der Erfindung wird der wesentliche Vorteil erreicht, daß durch das primäre Ingangsetzen des Faulungsprozesses mit Faulschlamm und dem sekundären Umstellen des gesamten Faulungsprozesses auf chemische Prozeßabwässer ein anaerober Abbau der eingangs genannten, hochbelasteten Prozeßabwässer in einfacher Weise unter Energierückgewinnung möglich ist, da nach dem Verfahren gemäß der Erfindung auch hochkonzentrierte Abwässer zur Ausfaulung und zum Abbau gelangen können. Dies ist insbesondere durch Flockung des Schlammes und die Rückführung des Schlammes in den Faulungsprozeß möglich, wobei dieser Prozeß nunmehr ohne Zugabe von Fremdstoffen ablaufen kann. Außerdem wird durch die Zusammenführung der Abwasserchargen in dem Mischer eine dosierte Beschickung mit dem umgewälzten Faulschlamm, und damit während der Faulung, möglich.

Durch die Rückführung des eigengebildeten Schlammes in den Kreislauf, der einen weiteren Schlamm aufbaut, kann der Faulungsprozeß aufrechterhalten werden, wobei der Abbau verhältnismäßig schnell vonstatten geht.

Die Erfindung bezieht sich weiterhin auf eine Anlage zur Durchführung des Verfahrens.

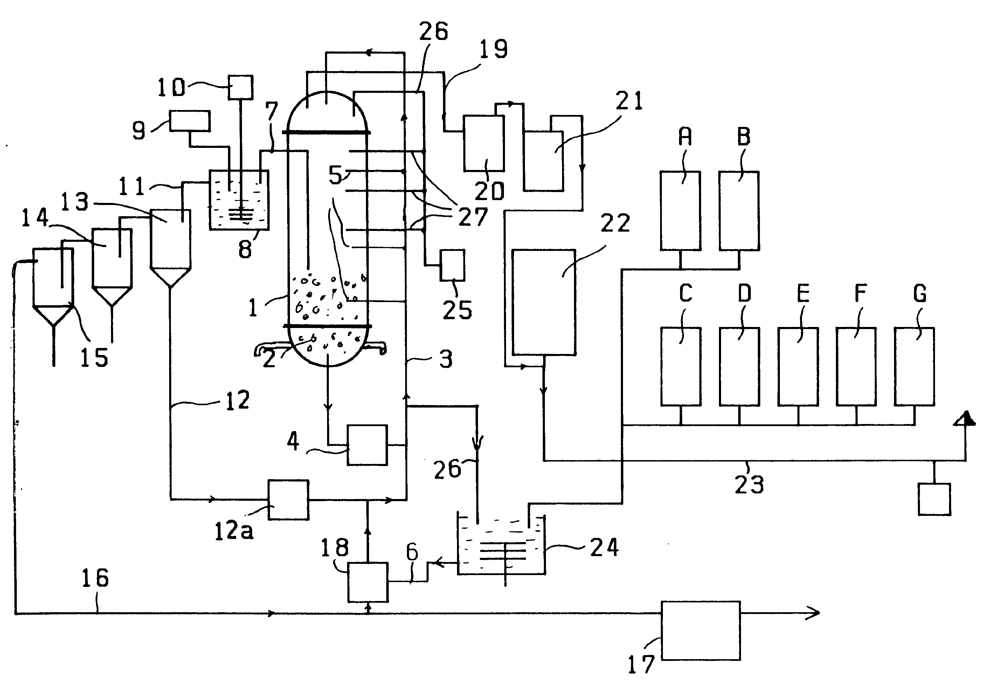

Anhand der Zeichnung soll am Beispiel des schematischen Aufbaus der Anlage das erfindungsgemäße Verfahren näher erläutert werden.

Die in der Figur dargestellte Anlage besteht im wesentlichen aus einem Faulbehälter 1 mit dem darin befindlichen Faulschlamm 2, einer externen Umwälzleitung 3, mit der der gesamte Faulschlamminhalt 2 über die Pumpe 4 umgewälzt werden kann. Die Pumpe 4 zieht den Faulschlamm an der unteren Trichterspitze des Faulbehälters 1 ab und führt ihn über den oberen Kopfpunkt wieder in den Faulbehälter 1 ein. Gleichzeitig kann der Faulschlamm durch die in verschiedenen Höhen angebrachten Zuleitungen 5 eingeführt werden, so daß eine ständige, hundertprozentige Durchmischung des Faulbehälterinhaltes gewährleistet ist.

Nachdem der Faulprozeß eingefahren ist, wird der hochaktive Schlamm aus den chemischen Abwässern aus einem Mischer 24 über eine Zuleitung 6 mittels einer Pumpe 18, die auch Trübwasser zuführen kann, in den Kreislauf 3, und damit in den Faulbehälter 1, eingeführt, ohne daß ein weiterer Zusatz von normalem Faulschlamm erfolgt.

Der im Faulbehälter 1 verdrängte Faulschlamm wird über eine Leitung 7 einem vorgeschalteten Flockerbehälter 8 zugeführt, dem von einem Vorratsbehälter 9 ein Flockungsmittel über ein Magnetvnetil, genau dosiert, zugeleitet wird. Im Behälter 8 ist ein Rührer 10 installiert, der langsam laufend das Medium total durchmischt, wobei sich eine sehr gute Schlammflocke ausbildet. Die Verdrängung erfolgt über eine Leitung 11 in einen weiteren, nachgeschalteten Behälter 13, in dem sich der gröbste Schlamm absetzt. Das vorhandene Trübwasser wird in einen weiteren Behälter 14 geleitet, in dem sich ein geringerer Teil Schlamm absetzt. Der gleiche Vorgang ergibt sich auch im Behälter 15. Das verdrängte Trübwasser wird dann über die Leitung 16 einem Pufferbehälter 17 zugeführt, von wo es einer biologischen Stufe zugeleitet wird. Außerdem kann das Trübwasser über die Pumpe 18 dem Kreislauf 3, und damit dem Faulschlammprozeß im Faulbehälter 1, zugeleitet werden.

An der Oberseite des Faulbehälters 1 kann über eine Leitung 19 das im Faulungsprozeß entstehende Gas entnommen werden, das einem Behälter 20 zugeleitet wird, von wo es zu einer Gaswäsche bzw. Schaumfalle 21 geleitet wird. Von hier aus wird das Gas einem Gasmeßbehälter 22 zugeleitet, in dem genau die täglich anfallende Abwassergasmenge gemessen wird. Das Gas wird dann über eine Leitung 23 zu einem Gasgenerator bzw. einer Abfackelvorrichtung geführt.

Der Faulungsprozeß im Faulbehälter 1 wird bei ca. 34° C geführt. Durch das relativ schnelle Absetzen und Umpumpen der Schlammasse ist eine merkliche Abkühlung nicht vorhanden. Die Kontaktzeit, die der Schlamm durchführt, ist verhältnismäßig lang.

Zur Durchführung des Faulungsprozesses werden Neutralisationsmittel benötigt, die in den Behältern A und B vorhanden sind. Diese in den Behältern vorhandenen Neutralisationsmittel werden dem Prozeß je nach Bedarf zudosiert, wobei der Behälter A für saure Neutralisation und der Behälter B für alkalische Neutralisation vorgesehen ist. Die Behälter C, D, E, F und G, deren Anzahl beliebig ist, dienen der Aufnahme der einzelnen Prozeßabwässer der chemischen Industrie. Bisher sind in jedem größeren Betrieb oder Chemiewerk viele Abwasserströme vorhanden, die zum Teil heute noch unkontrolliert zusammenlaufen und nur praktisch biologisch etwas nachbehandelt werden. Dabei sind keine Kenntnisse vorhanden, was in diesen Abwasserströmen überhaupt vorhanden ist. Proben dieser einzelnen Abwasserströme werden nun in den Behältern C bis G getrennt, aufgefüllt und einzeln getestet in Abhängigkeit vom Faulungsprozeß. Dieser Test bezieht sich darauf, wie weit der Abbau möglich ist und was mit diesem Stoff im Faulungsprozeß in einer anaeroben Stufe geschieht. Es hat sich gezeigt, daß ein einzelner Stoff, der schwer biologisch anaerob abbaubar ist, in Verbindung mit anderen Stoffen sehr gut anaerob abbaubar ist. Aus diesem Grunde ist den einzelnen Behältern C bis G ein Mischer 24 nachgeschaltet, in dem die Stoffe zusammengefahren und genau nach einer gewissen Zusammensetzung vorgemischt und dann den Prozeß zugeleitet werden. Die Zuführung kann über die Zuleitung 6 direkt in die Mischung erfolgen. Mit der Rückführungsleitung 26 kann Impfschlamm aus dem Kreislauf 3 abgezogen und in den Mischer zurückgeführt werden. Der Abbau der verschiedenen Stoffe, die zusammengeführt sind, wird kontinuierlich aus den Behältern C bis G abgezogen, über den Mischer 24 geleitet und kontinuierlich über 24 Stunden dem Prozeß zugegeben.

Die Anlage weist ferner einen Kleinkompressor 25 auf, mit dem Luftsauerstoff dem anaeroben Prozeß zugeführt werden kann. Der Luftsauerstoff kann entweder über die Leitung 26 von oben oder in verschiedenen Höhen über die Leitungen 27 dem Faulschlamm zudosiert werden. Dieser Luftsauerstoff hat die Aufgabe, die Reduzierung und die Bildung von Schwefelwasserstoff zu verhindern.

Die Umwälzung des Faulschlammes im Faulbehälter 1 erfolgt kontinuierlich über die Pumpe 4, und zwar einmal von oben acht Stunden, acht Stunden in der Höhe des obersten seitlichen Einlassen und acht Stunden in der Höhe des unteren seitlichen Einlasses. Dadurch wird eine totale Sicherstellung der kompletten Umwälzung erreicht und gleichzeitig verhindert, daß Ablagerungen im Faulbehälter 1 entstehen.

Es ist hervorzuheben, daß das Wasser über die Pumpe 18 schon hier mit dem Prozeßschlamm aus dem Mischer 24 vermischt wird, die Umwälzleitung 3 und den Faulbehälter 1 durchläuft, hier verdrängt und im Behälter 8 angeflockt wird. Im Behälter 13 wird der Schlamm über die Leitung 12 mittels der Pumpe 12a abgezogen und kontinuierlich zurückgeführt, um wieder in den laufenden Strom eingemischt zu werden. Der Überschuß des Wassers geht, wie oben dargestellt, über die Leitung 16 zum Behälter 17 und der nachfolgenden biologischen Stufe. Es muß von Zeit zu Zeit Schlamm aus dem Prozeß entnommen werden, was in den beiden Behältern 14 und 15 erfolgt.

Das Bemerkenswerte der erfindungsgemäßen Anlage ist, daß dieser eingefahrene Prozeß, der sich aufgebaut hat, aus eigenen Prozeßabwässern Schlamm entwickelt, Schlamm rückführt und Schlamm aufbaut und in ausgezeichneter Weise funktioniert und auch verhältnismäßig große Stöße von anderen Schadstoffen verträgt. Der CBS-Abbau liegt der zeit bei rund 75 bis 80 %. Der AOX-Abbau liegt in der Höhe von 80 bis 85 %. Dabei wurde mit 30,9 mg/l eingefahren. Am Ausgang wurde Werte kleiner als 0,1 mg/l festgestellt. Ferner können die Kontaktzeiten beliebig gesteigert werden. Es ist eine verhältnismäßig lange Kontaktierung vorhanden, so daß der Prozeß problemlos läuft. Es ist auch möglich, den Prozeß über das Wochenende oder in abwasserarmen Zeiten abzuschalten und intern weiterzuführen, so daß die Biomasse immer am Leben bleibt und aktiv ist.

Das erfindungsgemäße Verfahren hat ferner den Vorteil, daß es auch unabhängig ist von vielen anderen Eigenschaften, die der normale Faulungsprozeß mit sich führt. Es ist also ohne weiteres nach dem erfindungsgemäßen Verfahren möglich, den Abwasseranfall in einem Betrieb zu erfassen, die einzelnen Abwasserströme zu ermitteln, zu testen und dann eine Zusammenstellung zu ermitteln, die den Faulungsprozeß einwandfrei funktionieren läßt.

Selbstverständlich können die einzelnen Chargenbehälter C bis G bei einer Großanlage entfallen. Hier werden die Abwasserströme in vorgeschalteten Pufferbehältern zusammengeführt, wo sie einzeln abgerufen werden können. Die Neutralisationsbehälter A und B müssen vorhanden sein, wobei das Kernstück der gesamten Anlage der Faulbehälter 1 mit der Gaserzeugung und den nachgeschalteten Systemen ist. Es ist ferner selbstverständlich, daß die Anlage an den entsprechenden Teststellen verschiedene Instrumente zur Prozeßführung benötigt. Erforderlich ist einmal als wichtiger Parameter die PH-Messung, die Redoxmessung, die Temperatur, die Leitfähigkeit sowie zusätzlich im oberen Teil der Gashaube des Faulbehälters 1 eine O₂-Messung.

## Patentansprüche

1. Verfahren zum anaeroben Abbau von hochbelasteten Prozeßabwässern, wie sie insbesondere bei der chemischen Industrie, bei Papierfabriken, bei Zellulosefabriken, bei Fischfabriken, bei der Alkoholproduktion und -vernichtung od. dgl., anfallen, wobei der CSB-Gehalt bis zu 10⁶mg/l oder mehr betragen kann, **dadurch gekennzeichnet,** daß in mindestens einem Faulbehälter bei ca. 34° C ein Faulprozeß in Gang gesetzt wird, daß ein Faulschlamm durch Abziehen im unteren Bereich und Zuimpfen im oberen Bereich des Faulbehälters mittels einer Pumpe über einen externen Kreislauf durch kontinuierliche Umwälzung vermischt wird, wobei gleichzeitig Faulwasser in verschiedenen Höhen des Faulbehälters eingebracht werden kann, um eine ständige, gute Durchmischung des Faulbehälterinhalts zu gewährleisten, wobei dem Prozeß Sauerstoff in geringen Mengen zur Reduktion von H₂S zugeführt wird, wobei nach dem Einfahren des Faulprozesses ohne Beifügung von kommunalem Faulschlamm eine Umstellung auf chemische Prozeßabwässer derart durchgeführt wird, daß die Prozeßabwässer in einzelnen Behältern getrennt und zuvor analysiert werden und von den Behältern in Abhängigkeit des Faulungsprozesses in einem Mischbehälter nach einer gewissen Zusammensetzung vorgemischt und kontinuierlich dem Faulungsprozeß im Faulbehälter zugeleitet werden, wobei anfallender Faulschlamm vom Faulbehälter einem nachgeschalteten Flockerbehälter zugeleitet wird, dem eine genau dosierte Menge eines Flockungsmittels zugegeben und mittels Rührer mit dem Faulschlamm durchmischt wird, wobei der angeflockte Faulschlamm nun wiederum dem externen Kreislauf zur Umwälzung des Faulschlammes im Faulbehälter zugeführt wird und dem Kreislauf anfallendes Prozeßabwasser zugeführt wird und wobei über den Flockerbehälter eine Verdrängung erfolgt und in einem zweiten, nachgeschalteten Behälter ein Absetzen des gröbsten Schlammes erfolgt, worauf das Trübwasser einem dritten und ggf. vierten Behälter zum Absetzen der noch vorhandenen Schlammanteile zugeleitet wird, worauf das im letzten Behälter verdrängte Trübwasser entweder über einen Pufferbehälter einer biologischen Stufe zugeführt oder über eine Pumpe dem Faulbehälter zugeleitet wird, und daß das im Faulbehälter erzeugte Gas einem Gasbehälter zugeführt und anschließend gereinigt einem Entnahmesystem oder einer Abfackeleinrichtung zugeführt wird.

2. Anlage zur Durchführung des Verfahrens nach Anspruch 1, **gekennzeichnet durch** einen Faulbehälter (1) mit einer externen Umwälzleitung (3), in der sich eine Pumpe (4) zur Umwälzung des gesamten Faulschlamminhaltes befindet, wobei Zuleitungen (5) zum Faulbehälter in verschiedenen Höhen angebracht sind, einen dem Faulbehälter (1) nachgeschalteten und mit diesem über eine Leitung (7) verbundenen Flockerbehälter (8) mit einem Vorratsbehälter (9) für das Flockungsmittel und einem Rührer (10), nachgeschaltete und mit Leitungen verbundene Behälter (13, 14, 15), wobei der letzte Behälter (15) über eine Leitung (16) mit einem Pufferbehälter (17) verbunden ist und in der Leitung (16) eine Abzweigung für das Trübwasser vorgesehen ist, die mit einer Pumpe (18) verbunden ist, welche mit dem Kreislauf (3) in Verbindung steht, eine mit dem Behälter (13) verbundene Abzweigleitung (12), die über eine Pumpe (12a) mit dem Kreislauf (3) in Verbindung steht, eine an der Oberseite mit dem Faulbehälter (1) verbundene Gasleitung (19), die zu einem Behälter (20) führt, von wo eine Leitung zu einer Gaswäsche bzw. Schaumfalleneinrichtung (21) führt, deren Ausgang mit einem Gasmeßbehälter (22) verbunden ist und die entsprechende Leitung (23) zu einem Gasgenerator bzw. einer Abfackelvorrichtung führt, Behälter (A, B) für Neutralisationsmittel, die über eine Rohrleitung mit einem Mischer (24) verbunden sind, welcher ebenfalls über Rohrleitungen mit Behältern (C, D, E, F, G) verbunden ist, die zur Aufnahme der einzelnen Prozeßabwässer dienen, wobei der Ausgang des Mischers über eine Rohrleitung (6) mit dem Faulbehälter (1) verbunden ist und durch einen Kleinkompressor (25) für Luftsauerstoff der Überleitungen (26, 27) mit dem Faulbehälter (1) verbunden ist.

3. Anlage nach Anspruch 2, **dadurch gekennzeichnet,** daß zur Messung der wichtigsten Parameter Meßgeräte für die PH-Messung, die Redoxmessung, die Temperaturmessung, die Leitfähigkeitsmessung sowie im oberen Teil der Gashaube des Faulbehälters (1) zur 0₂-Messung Meßgeräte an den entsprechenden Meßstellen installiert sind.

## Claims

1. Process for the anaerobic digestion of highly charged process waters, such as occur in particular in the chemical industry, in paper factories, in cellulose factories, in fish factories, in the production and destruction of alcohol, or the like, in which the chemical oxygen demand value can amount to 10⁶mg/1 or more, characterised in that a putrefaction process is set in action at about 34°C in at least one septic tank, that a sludge is mixed by removal in the lower region and injection in the upper region of the septic tank by means of a pump by continuous circulation over an external circuit, wherein simultaneously supernatant water can be introduced at different levels of the septic tank, in order to ensure a continuous, thorough mixing of the contents of the septic tank, wherein oxygen in small amounts is supplied to the process for reduction of the H₂S, wherein, after the initiation of the putrefaction process, without addition of municipal sludge, a conversion of such a type is carried out on the chemical process water that the process water is divided into separate tanks and analysed first, and premixed from the tanks in dependence on the putrefaction process in a mixing tank according to a given composition and continuously supplied to the putrefaction process in the septic tank, wherein sludge arising from the septic tank is led to a flocculating -tank connected to it, to which a precisely measured quantity of a flocculating agent is added and mixed with the sludge by means of a stirrer, wherein the flocculated sludge is now fed back to the external circuit for circulating the sludge in the septic tank, and process water arising is fed to the circuit, and whereby a displacement results over the flocculating tank and a settling of the coarsest sludge results in a second, subsequently-connected tank, whereupon the cloudy water is fed to a third and if necessary a fourth tank for settling of the remaining sludge particles, whereupon the cloudy water displaced in the last tank is led either via a buffer tank to a biological stage or via a pump to the septic tank, and in that the gas produced in the septic tank is fed to a gas tank and subsequently fed purified to an extraction system or to a device for burning it off.

2. Installation for carrying out the process according to claim 1, characterised by a septic tank (1) with an external circulation line (3), in which a pump (4) for circulating the whole of the sludge is located, wherein supply lines (5) are connected to the septic tank (1) at different levels, a flocculating tank (8) with a storage tank (9) for the flocculating agent and a stirrer, which flocculating tank is connected to the septic tank (1) and linked to it by a line (7), containers (13, 14, 15) connected in and linked by lines, wherein the last container (15) is linked by a line (16) to a buffer tank (17) and in the line (16) a branch for the cloudy water is provided, which is connected to a pump (18) which is connected in the circuit (3), a branch line (12) connected to the container (13) and linked via a pump (12a) with the circuit (3), a gas line (19) connected at the top to the septic tank (1), which line leads to a container (20) from which a line leads to a gas washer or to a foam settling device, the outlet of which is connected to a gas measuring tank (22) and the corresponding line (23) leads to a gas generator or to a burn-off device, containers (A, B) for neutralising agents, which are connected via a pipe to a mixer (24) which in turn is connected by pipes to containers (C, D, E, F, G), which serve to receive the separate process waters, wherein the outlet from the mixer is connected to the septic tank (1) by a pipe (6) and is connected to the septic tank (1) via a small compressor (25) for air oxygen of the connections (26, 27).

3. Installation according to claim 2, characterised in that, for measuring the most important parameters, measuring instruments for pH, redox, temperature, conductivity and in the upper part of the gas hood of the septic tank (1) for O₂ measurement, are installed at the corresponding measurement positions.

## Revendications

1. Procédé pour la digestion anaérobie d'eaux usées fortement chargées provenant de processus industriels, comme celles produites en particulier dans l'industrie chimique, les papeteries, les usines de cellulose, les usines de conditionnement de poisson, dans la production et la destruction d'alcool ou analogues, dont la teneur en CSB peut atteindre 10⁶ mg/l ou davantage, caractérisé en ce que l'on fait démarrer un processus de putréfaction dans au moins une cuve de putréfaction à environ 34°C, que l'on mélange une boue de putréfaction par soutirage dans la partie inférieure et addition comme agent de germination dans la partie supérieure de la cuve de putréfaction au moyen d'une pompe par un circuit externe, par recirculation continue, en introduisant simultanément de l'eau de putréfaction à différentes hauteurs de la cuve de putréfaction sous insufflation d'oxygène, afin d'assurer un bon brassage permanent du contenu de la cuve, avec addition de faibles quantités d'oxygène au processus pour la réduction de H₂S, on opère, après le démarrage du processus de putréfaction, sans addition de boue de putréfaction urbaine, une conversion pour passer au traitement d'eaux usées de processus chimiques, ce traitement comprenant la collecte d'eaux usées de différents processus dans des récipients séparés et leur analyse préalable, leur envoi depuis ces récipients, en fonction du processus de putréfaction, dans un récipient mélangeur, où elles sont prémélangées selon une composition déterminée et d'où elles sont envoyées en continu au processus de putréfaction dans la cuve de putréfaction, la boue de putréfaction formée étant envoyée à un récipient de floculation précédant cette cuve et dans lequel est ajoutée une quantité exactement dosée d'un agent de floculation qui est mélangé à fond avec la boue de putréfaction au moyen d'un agitateur, la boue floculée étant envoyée de nouveau au circuit externe pour la recirculation de la boue de putréfaction dans la cuve, avec refoulement à travers le récipient de floculation dans un deuxième récipient monté à sa suite, dans lequel se produit un dépôt de la boue la plus grossière, l'eau qui surnage étant envoyée ensuite à un troisième et, éventuellement, à un quatrième récipient en vue du dépôt des fractions de boue encore présentes, l'eau trouble refoulée hors du dernier récipient étant envoyée ensuite à travers un récipient tampon à une étape biologique ou dirigée par une pompe à la cuve de putréfaction, et que l'on envoie le gaz produit dans la cuve de putréfaction à un récipient de gaz puis, après épuration, à un système de prélèvement ou un dispositif de brûlage à la torche.

2. Installation pour la mise en oeuvre du procédé selon la revendication 1, caractérisée par une cuve de putréfaction (1) avec une conduite externe de recirculation (3), dans laquelle se trouve un pompe (4) pour la recirculation de tout le contenu en boue putréfiée de la cuve, des conduites d'arrivée (5) menant à la cuve de putréfaction étant disposées à différentes hauteurs, un récipient de floculation (8) prévu à la suite de la cuve de putréfaction (1) et relié à elle par une conduite (7), un réservoir (9) pour le floculant et un agitateur (10) étant coordonnés à ce récipient de floculation (8), plusieurs récipients (13, 14, 15) prévus à la suite du récipient de floculation et raccordés par des conduites, le dernier (15) de ces récipients étant relié à un récipient tampon (17) par une conduite (16) dans laquelle est prévue une dérivation pour l'eau trouble, dérivation qui est reliée à une pompe (18) communiquant avec le circuit externe (1), une conduite de dérivation (12) reliant le premier (13) desdits récipients par une pompe (12a) au circuit externe (3), une conduite de gaz (19) reliée à la partie supérieure de la cuve de putréfaction (1) et menant à un récipient de gaz (20) d'où une conduite mène à un lavage de gaz ou un dispositif (21) formant un piège à mousse et dont la sortie est reliée à un récipients mesureur de gaz (22), la conduite (23) correspondante menant à un générateur de gaz ou un dispositif de brûlage à la torche, des récipients (A, B) pour des agents neutralisants, qui sont reliés par une tuyauterie à un mélangeur (24), lequel est également relié par des tuyauteries à des récipients (C, D, E, F, G) servant à la réception des différentes eaux usées provenant de divers processus, la sortie du mélangeur étant reliée par une tuyauterie (6) à la cuve de putréfaction (1), ainsi qu'un petit compresseur (25) jour fournir de l'oxygène atmosphérique par des conduites de transfert (26, 27) à la cuve de putréfaction (1).

3. Installation selon la revendication 2, caractérisée en ce que des appareils de mesure pour mesurer le pH, le potentiel d'oxydoréduction, la température et la conductivité, ainsi que, dans la partie supérieure du capot collecteur de gaz de la cuve de putréfaction (1), des appareils de mesure de O₂ sont installés à des points de mesure adéquats pour mesurer les paramètres les plus importants.
